# EUROPÄISCHE PATENTSCHRIFT

(11) **EP 3 867 813 B1**
(45) Veröffentlichungstag und Bekanntmachung des Hinweises auf die Patenterteilung: **26.07.2023**
(21) Anmeldenummer: 19789920.6
(22) Anmeldetag: 14.10.2019
(51) Int. Cl.: G06K 19/00, G06K 19/02, G06K 19/04, G06K 19/077, F16K 7/12, F16K 37/00, H01Q 1/22

(54) **VORRICHTUNG MIT EINEM SACKLOCH ZUM EINBRINGEN EINES TRANSPONDERS**
DEVICE HAVING A BLIND BORE FOR THE INTRODUCTION OF A TRANSPONDER
DISPOSITIF DOTÉ D'UN TROU BORGNE DESTINÉ À CONTENIR UN TRANSPONDEUR

(30) Priorität: 15.10.2018 DE 102018125524
(43) Veröffentlichungstag der Anmeldung: 25.08.2021
(73) Patentinhaber: Samson Aktiengesellschaft, 60314 Frankfurt am Main (DE); SED Flow Control GmbH, 74906 Bad Rappenau (DE)
(72) Erfinder: EHMIG, Uwe, 74177 Bad Friedrichshall (DE); RUTSCH, Uwe, 74906 Bad Rappenau (DE)
(74) Vertreter: Köllner & Partner mbB
(86) Internationale Anmeldenummer: PCT/EP2019/077816
(87) Internationale Veröffentlichungsnummer: WO 2020/078923

(56) Entgegenhaltungen:
- DE-A1- 10 227 681
- DE-A1- 19 839 622
- DE-A1-102012 104 409
- DE-B4- 19 839 622
- DE-U1-202011 104 822

## Beschreibung

### Gebiet der Erfindung

Die Erfindung betrifft eine Vorrichtung, beispielsweise ein Feldgerät, mit einem Sackloch zum Einbringen eines Transponders.

Feldgeräte besitzen zur eindeutigen Identifikation, oder auch um technischen Regelwerken zu entsprechen, Typenschilder oder Ähnliches. Solche Schilder werden häufig mit Barcodes oder QR-Codes versehen.

Moderne EDV-Systeme besitzen elektronische Lesegeräte zur schnellen Erfassung der Daten von Komponenten oder Geräten. Für diesen Zweck werden häufig passive Transponder verwendet, welche keinerlei Versorgung benötigen. Diese werden vor der Auslieferung programmiert und können jederzeit z.B. von den Kunden ausgelesen werden.

### Stand der Technik

Aus der Veröffentlichung WO 99/10673 A1 ist bekannt, einen Transponder oder Datenträger (z.B. vom RFID-Typ) durch Einbringen in ein Bohrloch oder Sackloch mit einem Ventil zu verbinden. Wie der Datenträger dort fixiert werden kann, ist nicht angegeben.

Eine spezielle Art, einen Transponder mittels Klemmelementen und Dichtelementen in einem Sackloch in einer Komponente eines Ventils zu fixieren, ist in DE 10 2016 106 818 B3 beschrieben. Die beschriebene Art ist jedoch sehr kompliziert und aufwändig, insbesondere weil eine Vielzahl von Teilen benötigt wird.

Die Gebrauchsmusterschrift DE 20 2011 104 822 U1 beschreibt eine Transponder-Baueinheit mit einem rohrförmigen bzw. zylindrischen Mantelelement, das einen IC-Baustein mit Primär- und Sekundär-Antenne auf einem flexiblen Substrat aufnimmt. Diese Transponder-Baueinheit ist grundsätzlich in ein Sackloch einsetzbar, allerdings ist nicht angegeben, wie sie dort fixiert werden könnte. Anspruch 1 ist gegen dieses Dokument abgegrenzt.

Aus der Veröffentlichung DE 10 2012 104 409 A1 ist ein Gehäuse für einen RFID-Transponder zum Einpressen in eine Öffnung bekannt. Dieses Gehäuse, das den Transponder nicht vollständig umschließt, hat einen Transponderbereich zur Aufnahme des RFID-Transponders und einen außerhalb davon angeordneten Einpressbereich zur Aufnahme von Einpresskräften, wobei diese Bereiche kraftentkoppelt sind.

DE 198 39 622 A1 offenbart ein Verfahren, eine Vorrichtung und ein System zur fertigungsbegleitenden Dokumentation und/oder Kennzeichnung sowie zur späteren Identifikation von beweglichen, transportablen Gegenständen oder Gütern. Dazu gehört ein Transponder, der nur durch Zerstören lösbar am Gegenstand oder Gut befestigt wird, vorzugsweise in einer Bohrung mittels Einspreizverbindung, wobei mindestens Teile des Gehäuses des Transponders plastisch verformt werden.

In der Veröffentlichung DE 102 27 681 A1 werden ein Verfahren zur Anbringung eines Transponders an einem Ventilkörper aus Metall und ein Transpondermodul zur Durchführung des Verfahrens beschrieben. Hierbei ist entscheidend, dass der Transponder eine stabförmig aufgewickelte Spule aufweist, wobei der Transponder in eine nichtmetallische Hülle eingebracht wird, die ihrerseits so in eine Kavität eines Druckbehälters eingebracht wird, dass die Spulenachse parallel zur Oberfläche des Druckbehälters im Bereich eines Fensters positioniert ist.

### Aufgabe

Aufgabe der Erfindung ist es, Vorrichtungen anzugeben, bei denen die Fixierung eines Transponders in einem Sackloch verbessert ist.

### Lösung

Diese Aufgabe wird durch den Gegenstand des unabhängigen Anspruchs gelöst. Vorteilhafte Weiterbildungen des Gegenstands des unabhängigen Anspruchs sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Die Aufgabe wird gelöst durch eine Vorrichtung, beispielsweise ein Feldgerät, ein Ventil oder eine Komponente davon, mit einem Sackloch zum Einbringen eines Transponders, wobei der Transponder von einer Hülle aus Elastomer, Silikon oder Kunststoff umgeben ist, und wobei der Transponder in seiner Hülle in das Sackloch eingebracht wurde. Das Sackloch weist an der Mündung einen zumindest partiell umlaufenden, überstehenden Vorsprung auf, wobei der Vorsprung derart umgebogen bzw. mechanisch umgeformt ist, dass er ein Herausfallen des Transponders in seiner Hülle aus dem Sackloch verhindert, wodurch insbesondere die Hülle formschlüssig fixiert ist. Der Vorsprung hat also die Gestalt einer Umrandung der Mündung des Sacklochs. Der Transponder in seiner abgeschlossenen Hülle wird durch eine Bördelung im Sackloch festgehalten.

Als Material für die Hülle wird dabei ein thermoplastischer Kunststoff bevorzugt. Der Transponder dient typischerweise zum Kennzeichnen der Vorrichtung, des Feldgeräts oder eines Bauteils davon. Zu diesem Zweck sollte er zumindest eine eindeutige Identifikation z.B. des Bauteils enthalten, beispielsweise eine Serien- oder Inventarnummer oder Ähnliches. Oft werden zusätzlich noch Prüf- und/oder Zulassungsdatum und/oder ähnliche z.B. sicherheitsrelevante Informationen bereitgestellt. Das Fixieren des Transponders im Sackloch gestaltet sich hierbei besonders leicht, ohne dass zusätzliche Teile oder aufwändige Montageschritte benötigt werden. Durch den umgebogenen Vorsprung ist der Transponder besonders sicher an der Vorrichtung fixiert.

Bei der Herstellung wird zunächst der Transponder in seiner Hülle in das Sackloch eingebracht, wobei der überstehende Vorsprung zu diesem Zeitpunkt noch nicht umgebogen ist. Anschließend wird der überstehende Vorsprung durch eine Bördelung mechanisch umgeformt bzw. gebogen, so dass er den Transponder mit seiner Hülle formschlüssig im Sackloch fixiert. Das Umbiegen des Vorsprungs geht besonders leicht, wenn der Vorsprung partiell am Umfang ausgebildet ist.

Vorzugsweise ist der Transponder passiv, es kann z.B. ein handelsüblicher RFID-Chip verwendet werden. Diese sind kostengünstig und vielseitig.

Alternativ dazu kann auch ein aktiver Transponder verwendet werden. Diese haben eine größere Reichweite, verlangen aber eine Batterie o.ä. als Energieversorgung.

Zum alternativen Ablesen von Informationen über die Vorrichtung mit einfacheren Mitteln kann auf der Hülle des Transponders eine Beschriftung oder ein Barcode oder ein Data-Matrix- oder ein QR-Code angebracht sein.

Vorzugsweise ist die Hülle des Transponders abgeschlossen, so dass sie den Transponder von allen Seiten umgibt. Die Handhabung ist dann besonders unkompliziert.

Die Herstellung ist besonders günstig, wenn die abgeschlossene Hülle des Transponders durch Umspritzen des Transponders hergestellt wurde.

Falls die Summe aus der größten Tiefe des Sacklochs und der Höhe des umlaufenden Vorsprungs mindestens der maximalen Höhe der Hülle des Transponders entspricht, kann verhindert werden, dass diese Hülle beim Bördeln beschädigt wird.

Die Produktion der Vorrichtung kann möglichst einfach gehalten werden, wenn der Vorsprung durch eine ringförmige Vertiefung um das Sackloch herum ausgebildet ist. Dann genügt eine spanende Bearbeitung, um die Vertiefung und damit auch den Vorsprung zu erzeugen. insbesondere hat das Bauteil, in dem das Sackloch angeordnet ist, keinen erhöhten Materialbedarf.

Vorzugsweise handelt es sich bei der Vorrichtung um ein Feldgerät, insbesondere ein Stellventil, oder auch um eine Membran für ein Ventil.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine Schnittansicht einer Vorrichtung, bei der das Sackloch an der Mündung einen Vorsprung aufweist, der derart umgebogen ist, dass er ein Herausfallen des Transponders verhindert;
- Fig. 2: eine Schnittansicht einer Vorrichtung, bei der die abgeschlossene Hülle des Transponders die Form eines Zylinders mit einem damit verbundenen Kopf hat, und der Zylinder umlaufende Widerhaken aufweist (Beispiel, nicht Teil der beanspruchten Erfindung);
- Fig. 3A: eine schematische 3D-Darstellung einer Membran, bei der die Hülle des Transponders als Verschlussteil ausgebildet ist (Beispiel, nicht Teil der beanspruchten Erfindung); und
- Fig. 3B: eine Schnittansicht durch eine Membran wie in Fig. 3A, wobei Verschlussteil und Transponder in das Sackloch eingesetzt wurden (Beispiel, nicht Teil der beanspruchten Erfindung).

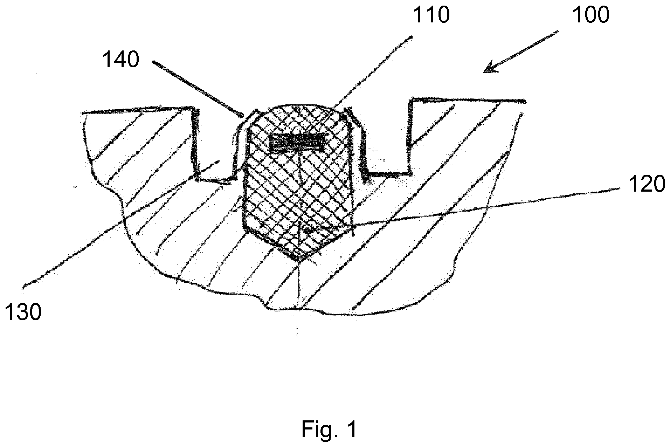

Fig. 1 zeigt eine erfindungsgemäße Vorrichtung 100 mit einem Sackloch, in dem sich ein Transponder 110, z.B. vom RFID-Typ, in einer abgeschlossenen Hülle 120 befindet. Die Hülle 120 ist aus Elastomer, Silikon oder Kunststoff und kann beispielsweise durch Umspritzen des Transponders erzeugt worden sein. Sie ist so gestaltet, dass sie den Transponder 110 vollständig umschließt und somit in einfacher Weise gegen die Umwelt abgedichtet. Um das Sackloch herum befindet sich eine Vertiefung 130, die z.B. durch Fräsen oder eine andere spanende Bearbeitung in die Vorrichtung 100 eingearbeitet worden sein kann. Dadurch ist um das Sackloch herum ein umlaufender Vorsprung 140 ausgebildet, der gegenüber der unmittelbaren Umgebung, also der Vertiefung 130, übersteht. Der überstehende Vorsprung 140 ist an seinem Ende umgebogen bzw. umgebördelt. Mit dieser Bördelung wird die Hülle 120 des Transponders im Sackloch fixiert. Ist die Hülle 120 wesentlich kleiner als das Sackloch, wird sie auf diese Weise gegen eventuelles Herausfallen gesichert. Sind jedoch Form und Größe der Hülle 120 und des Sacklochs aufeinander abgestimmt, so dass die Summe aus der größten Tiefe des Sacklochs und der Höhe des umlaufenden Vorsprungs 140 mindestens der maximalen Höhe der Hülle 120 entsprechen, so ist der Transponder 110 optimal in dem Sackloch fixiert.

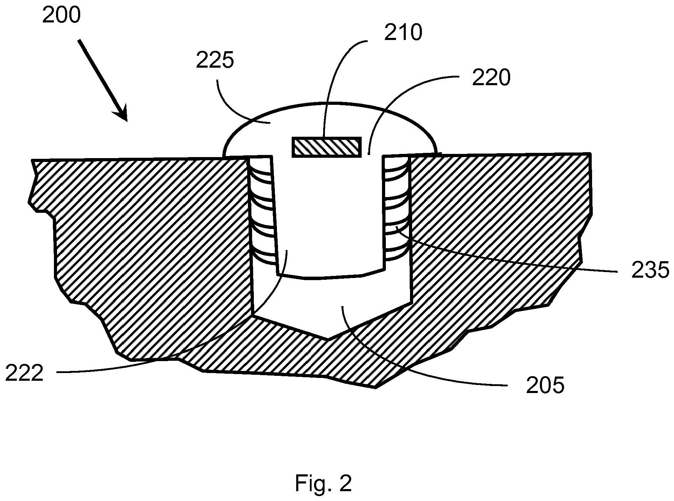

Auch Fig. 2 zeigt (als Beispiel, nicht Teil der beanspruchten Erfindung) eine Vorrichtung 200 mit einem Sackloch 205, in dem sich ein Transponder 210, z.B. vom RFID-Typ, in einer abgeschlossenen Hülle 220 befindet. Allerdings ist die Umgebung des Sacklochs nicht besonders gestaltet und braucht insbesondere keine vorstehende Umrandung oder umgebende Vertiefung aufzuweisen. Stattdessen ist die abgeschlossene Hülle 220 in Form eines Zylinders 222 mit einem damit verbundenen Kopf 225 ausgeführt, wobei der Durchmesser des Kopfes 225 größer als der Durchmesser des Sacklochs 205 ist und der Durchmesser des Zylinders 222 im Verhältnis zum Durchmesser des Sacklochs 205 so gestaltet ist, dass sich nach dem Einsetzen in das Sackloch 205 eine kraftschlüssige Verbindung bildet, die das Herausfallen verhindert. Um dies zu erleichtern, sind an dem zylindrischen Abschnitt 222 der Hülle 220 bevorzugt Widerhaken 235 vorhanden, die vorzugsweise umlaufend angeordnet sind. Diese sichern die Hülle des Transponders nach dem Einbringen in das Sackloch insbesondere in axialer Richtung.

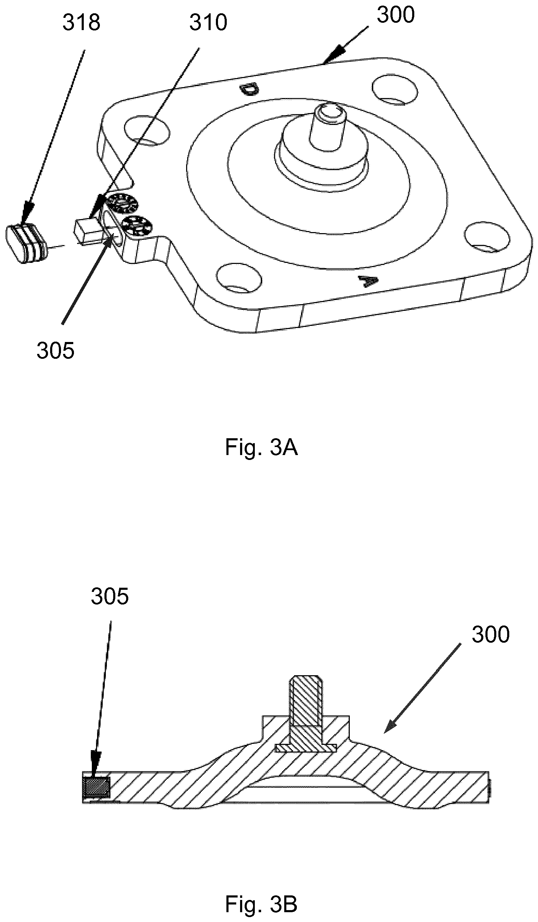

In Fig. 3A ist als Vorrichtung eine Membran 300 dargestellt. Das abgebildete Beispiel ist nicht Teil der beanspruchten Erfindung, kann aber selbstverständlich auch bei anderen Vorrichtungen oder Feldgeräten zur Anwendung kommen. Auch bei der Membran 300 ist ein Sackloch 305 zur Aufnahme eines Transponders 310 vorgesehen. In diesem Fall ist die Hülle des Transponders als Verschlussteil 318 ausgebildet. Das Verschlussteil kann das Sackloch 305 verschließen und ein Herausfallen des Transponders 310 verhindern. Dazu ist das Verschlussteil 318 so ausgeführt, dass es den Transponder 310 fast vollständig, also typischerweise von fünf Seiten, umschließen kann. Auch diese Ausführung der Hülle des Transponders als Verschlussteil 318 kann umlaufende Rillen oder Widerhaken oder Ähnliches aufweisen, was die Verbindung mit der Innenwand des Sacklochs 305 erleichtert.

In Fig. 3B ist dasselbe Beispiel (nicht Teil der beanspruchten Erfindung) mit der Vorrichtung 300 in zusammengesetztem Zustand dargestellt. In dem Sackloch 305 ist der vom Verschlussteil umhüllte Transponder aufgenommen. Der Transponder wird auf diese Weise fixiert.

Das Verschlussteil 318 dichtet das Sackloch 305 außerdem gegen die Umgebung ab. Das Verschlussteil 318 erreicht seine Dicht- und Klemmfunktion unter anderem durch eine geeignete Materialkombination mit unterschiedlichen Elastizitäten. Sowohl das Verschlussteil 318 als auch ggf. die Feldgerätkomponente, in der sich das Sackloch 305 befindet, können z.B. aus einem Elastomer, Gummi oder Silikon bestehen. Eine der Komponenten kann ggf. aus einem harten Material, wie z.B. Kunststoff, Stahl, Aluminium o.ä. bestehen. Alternativ zu umlaufenden Widerhaken am Verschlussteil 318 kann z.B. auch eine Bördelung am Umfang vorgesehen sein.

### Glossar

### Bördeln

Unter Bördeln versteht man das Umbiegen des Randes von Blechen. Dabei wird eine Versteifung der umgebogenen Kante erzielt oder eine Verbindung aus mehreren Bauteilen geschaffen.

### Sackloch

Als Sackloch wird in der Fertigungstechnik eine Bohrung bezeichnet, die das Werkstück nicht vollständig durchdringt wie eine Durchgangsbohrung, also eine bestimmte Tiefe hat.

### Transponder

Ein Transponder ist ein Funk-Kommunikationsgerät, das eingehende Signale aufnimmt und automatisch beantwortet bzw. weiterleitet.

### passiver Transponder

Unter passiven Transpondern versteht man Systeme, die zur Kommunikation und zur Abarbeitung interner Prozesse benötigte Energie ausschließlich aus dem Feld der Sende-/Empfangseinheit beziehen. Passive Transponder benötigen keine eigene Stromversorgung, können aber nur auf kurze Distanzen arbeiten. Bekannteste Bauart ist die Radio Frequency Identification (RFID). Typische Anwendungen sind die Identifizierung von Objekten, Haustierregistrierungs-Chips oder Chipkarten und Schlüsselanhänger für ein Zugangs-Kontrollsystem. Ein aktiver Sensor (in Verbindung mit einem Computer) liest und decodiert die Daten, die der passive Transponder sendet.

### aktiver Transponder

Aktive Transponder verfügen über eine eigene Energieversorgung. Entweder haben sie eine eingebaute Batterie (oder z.B. einen Kondensator) oder werden an ein externes Stromnetz angeschlossen. Dadurch sind nicht nur größere Kommunikationsreichweiten möglich, auch die Verwaltung größerer Datenspeicher bzw. der Betrieb integrierter Sensorik wird realisierbar. Einfache aktive Transponder werden zum Beispiel bei der Identifizierung von Flugzeugen verwendet: Der im Flugzeug eingebaute Transponder empfängt ein kodiertes Signal einer Überwachungs- und Kontrollstelle und beantwortet dieses Signal auf einer vorgegebenen Frequenz. Dieses Antwortsignal wird von der Überwachungsstelle empfangen und mit dem Radarecho zusammen dargestellt.

### Widerhaken

Ein Widerhaken ist ein an einem Bauteil ausgebildeter Haken, dessen spezifische Form das Entfernen des Bauteils schwierig oder unmöglich macht. Erreicht wird diese Eigenschaft dadurch, dass die Spitze des Widerhakens in Richtung der Bewegung beim versuchten Entfernen des Bauteils weist.

### Bezugszeichen

- 100: Vorrichtung bzw. Feldgerät
- 110: Transponder
- 120: Hülle des Transponders
- 130: Vertiefung
- 140: umgebördelter Vorsprung

- 200: Vorrichtung bzw. Feldgerät
- 205: Sackloch
- 210: Transponder
- 220: Hülle des Transponders
- 222: zylindrisches Teil der Hülle
- 225: Kopfteil der Hülle
- 235: Widerhaken

- 300: Membran
- 305: Sackloch mit vom Verschlussteil umhülltem Transponder
- 310: Transponder
- 318: Verschlussteil

### zitierte Literatur

### zitierte Patentliteratur

WO 99/10673 A1
DE 10 2016 106 818 B3
DE 20 2011 104 822 U1
DE 10 2012 104 409 A1
DE 198 39 622 A1
DE 102 27 681 A1

## Patentansprüche

1. System zur Befestigung eines Transponders in einem Sackloch, das System umfassend
1.1 den Transponder (110);
1.2 eine Vorrichtung (100) mit dem Sackloch (205) zum Einbringen des Transponders (110);
1.3 wobei der Transponder (110) von einer Hülle (120) aus Elastomer, Silikon oder Kunststoff umgeben ist; und
1.3.1 wobei der Transponder (110) in seiner Hülle (120) in das Sackloch (205) eingebracht wurde;
**dadurch gekennzeichnet,**
1.4 dass das Sackloch an der Mündung einen zumindest partiell umlaufenden, überstehenden Vorsprung (140) aufweist; und
1.5 dass der Vorsprung (140) derart umgebogen ist, dass er ein Herausfallen des Transponders (110) in seiner Hülle (120) aus dem Sackloch verhindert.

2. System nach dem vorhergehenden Anspruch,
**dadurch gekennzeichnet,**
**dass** der Transponder (110) passiv ist.

3. System nach Anspruch 1,
**dadurch gekennzeichnet,**
**dass** der Transponder (110) aktiv ist.

4. System nach einem der vorhergehenden Ansprüche,
**dadurch gekennzeichnet,**
**dass** auf der Hülle (120) des Transponders eine Beschriftung oder ein Barcode oder ein Data-Matrix- oder ein QR-Code angebracht ist.

5. System nach einem der vorhergehenden Ansprüche,
**dadurch gekennzeichnet,**
**dass** die Hülle (120) des Transponders abgeschlossen ist;
wobei die Hülle (120) den Transponder (110) von allen Seiten umgibt.

6. System nach einem der vorhergehenden Ansprüche,
**dadurch gekennzeichnet,**
**dass** die Hülle (120) durch Umspritzen des Transponders (110) gebildet ist.

7. System nach einem der vorhergehenden Ansprüche,
**dadurch gekennzeichnet,**
**dass** die Summe aus der größten Tiefe des Sacklochs und der Höhe des umlaufenden Vorsprungs (140) mindestens der maximalen Höhe der Hülle (120) des Transponders (110) entspricht.

8. System nach einem der vorhergehenden Ansprüche,
**dadurch gekennzeichnet,**
**dass** der Vorsprung (140) durch eine ringförmige Vertiefung (130) um das Sackloch herum ausgebildet ist.

9. System nach einem der vorhergehenden Ansprüche,
**dadurch gekennzeichnet,**
**dass** es sich bei der Vorrichtung (100) um ein Stellventil handelt.

10. System nach einem der Ansprüche 1 bis 8,
**dadurch gekennzeichnet,**
**dass** es sich bei der Vorrichtung (100) um eine Membran (300) für ein Ventil handelt.

## Claims

1. System for mounting a transponder in a blind hole, the system comprising
1.1 the transponder (110);
1.2 a device (100) having the blind hole (205) for inserting the transponder (110);
1.3 wherein the transponder (110) is surrounded by a sheath (120) of elastomer, silicone or plastic; and
1.3.1 wherein the transponder (110) in its sheath (120) has been inserted into the blind hole (205);
**characterised**
1.4 in that the blind hole has an at least partially circumferential, projecting protrusion (140) at the mouth; and
1.5 in that the protrusion (140) is bent over in such a way that it prevents the transponder (110) in its casing (120) from falling out of the blind hole.

2. System according to the preceding claim,
**characterized**
**in that** the transponder (110) is passive.

3. System according to claim 1,
**characterized**
**in that** the transponder (110) is active.

4. System according to one of the preceding claims,
**characterized**
**in that** a label or a barcode or a data matrix or a QR code is applied to the cover (120) of the transponder.

5. System according to any one of the preceding claims,
**characterized**
**in that** the cover (120) of the transponder is sealed;
wherein the cover (120) surrounds the transponder (110) from all sides.

6. System according to any one of the preceding claims,
**characterized**
that the cover (120) is formed by overmoulding the transponder (110).

7. System according to any one of the preceding claims,
**characterised**
**in that** the sum of the maximum depth of the blind hole and the height of the circumferential projection (140) is at least equal to the maximum height of the cover (120) of the transponder (110).

8. System according to any one of the preceding claims,
**characterized**
**in that** the protrusion (140) is formed by an annular recess (130) around the blind hole.

9. System according to any one of the preceding claims,
**characterized**
**in that** the device (100) is a control valve.

10. System according to any one of claims 1 to 8,
**characterised**
**in that** the device (100) is a diaphragm (300) for a valve.

## Revendications

1. Système de fixation d'un transpondeur dans un trou borgne, le système comprenant
1.1 le transpondeur (110) ;
1.2 un dispositif (100) avec le trou borgne (205) pour l'insertion du transpondeur (110) ;
1.3 le transpondeur (110) étant entouré d'une enveloppe (120) en élastomère, en silicone ou en matière plastique ; et
1.3.1 le transpondeur (110) ayant été introduit dans son enveloppe (120) dans le trou borgne (205) ;
**caractérisé en ce**
1.4 que le trou borgne présente à l'embouchure une saillie (140) qui fait au moins partiellement le tour et qui dépasse ; et
1.5 que la saillie (140) est recourbée de telle sorte qu'elle empêche le transpondeur (110) dans son enveloppe (120) de tomber hors du trou borgne.

2. Système selon la revendication précédente,
**caractérisé en ce**
**que** le transpondeur (110) est passif.

3. Système selon la revendication 1,
**caractérisé en ce**
**que** le transpondeur (110) est actif.

4. Système selon l'une des revendications précédentes,
**caractérisé en ce**
**qu'**une inscription ou un code à barres ou un code Data Matrix ou un code QR est apposé sur l'enveloppe (120) du transpondeur.

5. Système selon l'une quelconque des revendications précédentes,
**caractérisé en ce**
**que** l'enveloppe (120) du transpondeur est fermée ;
l'enveloppe (120) entourant le transpondeur (110) de tous les côtés.

6. Système selon l'une quelconque des revendications précédentes,
**caractérisé en ce**
**que** l'enveloppe (120) est formée par surmoulage du transpondeur (110).

7. Système selon l'une quelconque des revendications précédentes,
**caractérisé en ce**
**que** la somme de la plus grande profondeur du trou borgne et de la hauteur de la saillie périphérique (140) correspond au moins à la hauteur maximale de l'enveloppe (120) du transpondeur (110).

8. Système selon l'une quelconque des revendications précédentes,
**caractérisé en ce**
**que** la saillie (140) est formée par une cavité annulaire (130) autour du trou borgne.

9. Système selon l'une quelconque des revendications précédentes,
**caractérisé en ce**
**que** le dispositif (100) est une soupape de positionnement.

10. Système selon l'une quelconque des revendications 1 à 8,
**caractérisé en ce**
**que** le dispositif (100) est une membrane (300) pour une soupape.
